# EUROPÄISCHE PATENTANMELDUNG

(11) **EP 3 998 004 A1**
(43) Veröffentlichungstag der Anmeldung: **18.05.2022**
(21) Anmeldenummer: 21205167.6
(22) Anmeldetag: 28.10.2021
(51) Int. Cl.: A47J 36/06, A47J 36/08, A47J 36/12

(54) **KOCHGEFÄSS**

(30) Priorität: 30.10.2020 DE 102020213686
(71) Anmelder: RÖSLE GROUP GmbH, 87616 Marktoberdorf (DE)
(72) Erfinder: Port, Christian, 86875 Waal (DE); Jung, David, 87439 Kempten (DE)
(74) Vertreter: Dr. Weitzel & Partner

(57) **Zusammenfassung**

Die Erfindung betrifft ein Kochgefäß (10) mit einem mit einer oberen Öffnung (11) versehenen Gefäßkörper (12), der eine die Öffnung (11) umschließende Gefäßwand (13) mit einem oberen Rand (14) aufweist; mit einem Deckel (1), der einen ringförmigen Deckelrand (2) zur Auflage auf den oberen Rand (14) der Gefäßwand (13)und einen vom ringförmigen Deckelrand (2) vorstehenden Axialvorsprung (3) aufweist, der mit einem Abstand zu einem äußeren Umfang des Deckelrands (2) angeordnet ist, wobei der Axialvorsprung (3) in einer auf die Gefäßwand (13) aufgelegten Schließposition des Deckels (1) in die Öffnung (11) eingreift; und der Axialvorsprung (3) über seinem Umfang wenigstens zwei Unterbrechungen (4) aufweist, mit denen ein Bogen (3.1) des Axialvorsprungs (3) von einem ein- oder mehrteiligen verbleibenden Abschnitt (3.2) des Axialvorsprungs (3) abgetrennt wird. Das erfindungsgemäße Kochgefäß (10) ist dadurch gekennzeichnet, dass der Bogen (3.1) einen Innendurchmesser (Di) aufweist, der einem Außendurchmesser (da) des oberen Rands (14) der Gefäßwand (13) entspricht.

## Beschreibung

Die vorliegende Erfindung betrifft ein Kochgefäß mit einem mit einer oberen Öffnung versehenen Gefäßkörper, der eine die Öffnung umschließende Gefäßwand mit einem oberen Rand aufweist, ferner mit einem Deckel zur Auflage auf den oberen Rand der Gefäßwand.

Deckel dienen bei einem Kochgefäß dem Verschließen einer oberen Öffnung des Gefäßkörpers, um während des Garvorgangs das Austreten von Wasserdampf und Wärme zumindest zu begrenzen. Die Deckel können ferner verwendet werden, um beim Ausgießen von Kochflüssigkeit am Ende des Kochvorgangs, beispielsweise von Wasser bei der Zubereitung von Nudeln oder dergleichen, also dem sogenannten Abseihen, die Speise im Gefäßkörper zurückzuhalten, damit die Speise nicht zusammen mit der Flüssigkeit ausgegossen wird. Vielfach erfolgt dies dadurch, dass ein Benutzer den Deckel beim Ausgießvorgang etwas nach hinten verschiebt, sodass sich ein sichelförmiger Spalt auf der Ausgießseite ergibt, der zwar das Wasser, nicht jedoch die Speise durchlässt. Der Deckel, der dann bei herkömmlichen Kochgefäßen nur noch punkt- oder linienförmig auf dem oberen Gefäßwandrand aufliegt, muss somit in einer instabilen Position auf dem oberen Rand der Gefäßwand gehalten werden und, da sich auch diametral zum Ausgießspalt zwischen dem Deckel und dem Gefäßkörper eine Öffnung durch das Verschieben des Deckels ergibt, tritt meist Wasserdampf auf der dann oben angeordneten Seite des Kochgefäßes aus. Dieser Wasserdampf führt nicht nur zum Beschlagen von Brillen bei Brillenträgern, sondern kann auch Verbrennungen hervorrufen, wenn er beispielsweise direkt auf eine freie Hautpartie einer ausgießenden Person trifft.

Um die zuvor dargestellte instabile Lage des Deckels beim Ausgießen zu vermeiden, schlägt DE 847 340 B vor, in der Zentrierwulst eines Deckels kleine Ausnehmungen vorzusehen, welche es ermöglichen, den Deckel außer der Mitte des Kochtopfes (Gefäßkörpers) aufzusetzen, ohne dass der Deckel beim Abseihen rutschen kann und trotzdem einen schmalen Ausflussspalt freigibt. Ein seitliches Entweichen des Dampfes und von kochendem Wasser soll dabei nicht vorkommen, da der Deckel an den Seiten mit seinem überstehenden Rand den Kochtopf noch genügend gut verschließen soll. Allerdings findet in der Praxis bereits bei einem leichten Abheben des Deckels von der Gefäßwand kein ausreichender Verschluss mehr statt, der das unerwünschte Austreten von Dampf verhindert. Somit muss der Deckel beim Ausgießen stets fest auf den Gefäßkörper gedrückt werden.

US 5 613 618 A offenbart ein gattungsgemäßes Kochgefäß mit einem verschiebbaren Deckel, wobei der Deckel einen unrunden Axialvorsprung aufweist, dessen Abstand zum äußeren Umfang des Deckelrands in zwei diametral gegenüberliegenden seitlichen Bereichen kleiner ist als der Abstand in um annähernd 90° versetzt hierzu angeordneten Bereichen. Der Axialvorsprung ist in den Bereichen mit dem größeren Abstand unterbrochen, sodass auf der einen Seite in einer außermittig verschobenen Position des Deckels eine Ausgießöffnung freigegeben wird und auf der diametral gegenüberliegenden Seite eine Eintrittsöffnung für Luft freigegeben wird, um das Ausgießen von Flüssigkeit zu erleichtern. Die Lufteintrittsöffnung, die beim Abseihen hinten oben positioniert ist, lässt jedoch auch Dampf nach außen entweichen, wenn kochende Flüssigkeit abgegossen wird.

DE 295 03 504 U1 offenbart einen Kochtopf mit Zusatzfunktionen, nämlich mit einem verschiebbaren Topfdeckel, um ein kontrolliertes Abgießen von Flüssigkeiten und darüber hinaus ein partielles Öffnen des Topfes zu ermöglichen, und mit der Möglichkeit der senkrechten Positionierung des Topfdeckels in einem Griff des Gefäßkörpers. Bei der Verschiebung des Topfdeckels wird dieser entlang von axialen Bereichen der Griffe geführt und kann an den Griffen arretiert werden. In der verschobenen Position kann jedoch Dampf hinten aus dem Topf austreten.

DE 92 05 199 U1 offenbart ein weiteres Kochgefäß mit einem verschiebbaren Deckel, der jedoch ebenfalls den Austritt von Dampf im verschobenen Zustand des Deckels nicht verhindern kann.

DE 39 05 002 A1 offenbart ein Kochgefäß mit einer Ausschüttwölbung im Deckel.

DE 10 2008 053 181 B4 offenbart ein weiteres gattungsgemäßes Kochgefäß. Auch bei diesem Kochgefäß kann der Deckel gegenüber dem Gefäßkörper durch einen nach hinten gerichteten Druck soweit verschoben werden, bis sich ein Ausgießspalt auftut. Durch die komplementäre Ausgestaltung der Auflageflächen zwischen Deckel und Gefäßkörper kann auch dann noch der Deckel schließend auf dem Gefäßkörper aufliegen, wenn sich der Deckel in seiner außermittig verschobenen Position befindet. Durch das Aufliegen des Deckels auf der Gefäßwand soll der Austritt von Dampf vermieden werden. Allerdings ist es auch hier erforderlich, dass der Deckel satt auf der Gefäßwand aufliegen muss und bereits bei einer leicht abgehobenen Stellung heißer Dampf zwischen Gefäßwand und Deckel austritt.

WO 2012/121684 A1 offenbart einen Deckel für ein Kochgefäß, wobei der Deckel zwischen einer Schließposition und einer versetzten Position versetzbar ist. Der Deckel weist einen Grundkörper mit einem Rand, eine Tragoberfläche und sich nach unten erstreckende Vorsprünge auf.

Der vorliegenden Erfindung liegt die Aufgabe zugrunde, ein Kochgefäß mit einem mit einer oberen Öffnung versehenen Gefäßkörper und einem die Öffnung verschließenden, verschiebbaren Deckel anzugeben, bei dem auch in der verschobenen Position - Abgießposition - des Deckels der ungewollte Austritt von heißem Dampf am hinteren Ende des Kochgefäßes zuverlässig vermieden wird, selbst wenn der Deckel nicht vollflächig auf den Gefäßkörper gepresst wird.

Die erfindungsgemäße Aufgabe wird durch ein Kochgefäß mit den Merkmalen von Anspruch 1 und ein Kochgefäß mit den Merkmalen von Anspruch 6 gelöst. Die abhängigen Ansprüche beschreiben vorteilhafte und besonders zweckmäßige Ausgestaltungen der Erfindung.

Ein erfindungsgemäßes Kochgefäß weist einen mit einer oberen Öffnung versehenen Gefäßkörper auf, der eine die Öffnung umschließende Gefäßwand mit einem oberen Rand umfasst. Die Öffnung stellt das obere Ende des Innenraumes (Garraumes) des Kochgefäßes dar. Die Öffnung kann insbesondere kreisförmig sein, jedoch kommen prinzipiell auch andere Formen in Betracht. Entsprechend ist die Gefäßwand insbesondere rotationssymmetrisch, beispielsweise zylindrisch oder konisch, jedoch sind auch andere Gestaltungen der die Öffnung umschließenden Gefäßwand möglich. Der obere Rand der Gefäßwand kann, wie bei Kochgefäßen üblich, an seinem oberen Ende radial nach außen gewölbt sein, um eine Abschüttkante auszubilden. Das obere Ende des Randes ist also konisch erweitert. Wenn eine solche Wölbung vorgesehen ist, so schließt der Begriff "oberer Rand" gemäß der vorliegenden Offenbarung gemäß einer Ausführungsform nur jenen Endabschnitt der Gefäßwand ein, welcher diese Wölbung nach außen aufweist. Bevorzugt schließt der Begriff jedoch sowohl den Endabschnitt mit der Wölbung als auch einen sich unterhalb daran anschließenden Abschnitt ein, der zum Beispiel einen konstanten Durchmesser aufweist.

Erfindungsgemäß weist das Kochgefäß einen Deckel auf, der einen ringförmigen Deckelrand zur Auflage auf den oberen Rand der Gefäßwand umfasst. Der ringförmige Deckelrand ist entsprechend der Gestaltung der Gefäßwand beziehungsweise der Öffnung kreisringförmig oder auch hiervon abweichend gestaltet. Der flächige, die Öffnung abdeckende Teil des Deckels ist insbesondere zweiteilig, mit einem radial inneren Deckelzentrum, das scheibenförmig ist, und mit dem sich radial außen an das Deckelzentrum anschließenden Deckelrand. Das Deckelzentrum und der Deckelrand können, wie nachfolgend noch erläutert wird, aus verschiedenen Materialien bestehen, insbesondere das Deckelzentrum aus einem vergleichsweise harten Werkstoff wie Stahl oder Glas oder der Deckelrand aus einem vergleichsweise weicheren Werkstoff wie Gummi, insbesondere Silikon.

Der ringförmige Deckelrand weist einen Axialvorsprung auf, also einen Vorsprung, der im auf dem Gefäßkörper aufgesetzten Zustand des Deckels vom Deckelrand nach unten vorsteht. Der Axialvorsprung ist mit einem Abstand zu einem äußeren Umfang des Deckelrands angeordnet, sodass er in einer auf die Gefäßwand aufgelegten Schließposition des Deckels in die Öffnung, die von der Gefäßwand umschlossen wird, eingreift. Mit anderen Worten ragt der Axialvorsprung dann in den Gefäßkörper hinein.

Gemäß einer ersten Ausführungsform der Erfindung weist der Axialvorsprung über seinem Umfang wenigstens zwei Unterbrechungen auf, mit denen ein Bogen des Axialvorsprungs von einem ein- oder mehrteiligen verbleibenden Abschnitt des Axialvorsprungs abgetrennt wird. Die Unterbrechung dient dazu, dass ein entsprechender Abschnitt des oberen Rands der Gefäßwand in einer gegenüber der Schließposition verschobenen Abgießposition des Deckels in die zwei Unterbrechungen eingreifen kann, sodass der Deckel mit seiner Unterseite vollflächig auf dem oberen Rand der Gefäßwand aufliegt, ohne dass eine verkippende Linienauflage erzeugt wird.

Erfindungsgemäß weist der Bogen des Axialvorsprungs einen Innendurchmesser auf, der einem Außendurchmesser des oberen Rands der Gefäßwand entspricht.

Wenn vorliegend der äußere Umfang und der innere Umfang des Axialvorsprungs und der Gefäßwand genannt werden, so beziehen sich diese Begriffe auf die radial äußere Kontur beziehungsweise radial innere Kontur des Axialvorsprungs beziehungsweise der Gefäßwand, wobei die Kontur kreisbogenförmig oder anderes geformt sein kann. Demgemäß kann, wenn eine Wölbung nach außen am oberen Endabschnitt der Gefäßwand vorgesehen ist, der Innendurchmesser am Bogen des Axialvorsprungs eine Kontur aufweisen, die entweder nur dem Endabschnitt mit der Wölbung der Gefäßwand entspricht, wenn nämlich der Axialvorsprung eine entsprechend kleine Tiefe hat, oder eine Kontur aufweisen, die sowohl der Wölbung als auch dem Außendurchmesser des sich daran anschließenden Abschnitts der Gefäßwand entspricht.

Durch diese Ausgestaltung der Erfindung wird erreicht, dass der innere Umfang des Bogens des Axialvorsprungs in der Abgießposition des Deckels gleichmäßig und vollumfänglich am gegenüberstehenden äußeren Umfang des oberen Rands der Gefäßwand anliegt und dadurch eine Abdichtung bildet, die ein Entweichen von Dampf auch dann zumindest weitgehend verhindert, wenn der Deckel leicht vom oberen Rand der Gefäßwand abgehoben ist, solange noch eine Berührung zwischen dem Axialvorsprung und der Gefäßwand stattfindet.

Bevorzugt weist der Bogen des Axialvorsprungs ferner einen Außendurchmesser auf, der einem Innendurchmessers des oberen Rands der Gefäßwand entspricht. Damit wird auch in der Schließposition des Deckels eine entsprechende vollflächige Anlage und Abdichtung zwischen dem Bogen des Axialvorsprungs und der Gefäßwand erreicht. Auch hier gelten die Ausführungen zu einer Gefäßwand mit einer Wölbung nach außen am oberen Ende.

Besonders günstig ist es, wenn der Axialvorsprung in der Schließposition des Deckels mit seinem äußeren Umfang des Bogens und zumindest einem Abschnitt des äußeren Umfangs des verbleibenden Abschnitts abdichtend an einem inneren Umfang des oberen Rands der Gefäßwand anliegt. Damit wird eine Abdichtung auch in einem Umfangsabschnitt außerhalb des Bogens erreicht.

Der Deckel ist entsprechend vorteilhaft aus der Schließposition in die Abgießposition verschiebbar, in welcher der Bogen mit seinem inneren Umfang abdichtend an einem äußeren Umfang des oberen Rands der Gefäßwand anliegt, wobei der verbleibende Abschnitt mit einem diametral zum Bogen angeordneten äußeren Umfang zum gegenüberliegenden inneren Umfang des oberen Rands der Gefäßwand mit Abstand positioniert ist, sodass hier eine Ausgießöffnung zwischen dem Axialvorsprung und der Gefäßwand gebildet wird.

Besonders bevorzugt weist der Bogen des Axialvorsprungs in der Axialrichtung des Axialvorsprungs eine geringere Höhe auf als benachbart hierzu angeordnete Bereiche des verbleibenden Abschnitts des Axialvorsprungs. Damit kann der Bogen leicht beim Verbringen des Deckels aus der Schließposition in die Abgießposition über den oberen Rand der Gefäßwand hinweg geschoben werden. Die vergleichsweise weiter vorstehenden Bereiche des verbleibenden Abschnitts sind besonders dann günstig, wenn der Deckel gemäß einer Ausführungsform der Erfindung in einer senkrechten oder nahezu senkrechten Position am Gefäßkörper befestigbar ist, weil dann nämlich die Bereiche mit der größeren Höhe Kondensat, das entlang der Deckelunterseite abläuft, auffangen können. Wenn der Deckel wieder auf den Gefäßkörper aufgesetzt wird, so fließt das Kondensat entsprechend in den Gefäßkörper ab.

Gemäß einer alternativen Ausführungsform der Erfindung weist der Axialvorsprung über seinem Umfang wenigstens zwei Abschnitte auf, nämlich einen Bogen, der auch als hinterer Bogen bezeichnet werden kann, und einen sich in Umfangsrichtung daran anschließenden oder mit Abstand hierzu angeordneten ein- oder mehrteiligen verbleibenden Abschnitt. Der Bogen des Axialvorsprungs ist gegenüber dem verbleibenden Abschnitt am Deckelrand radial nach innen versetzt und weist aber trotzdem einen Außendurchmesser auf, der einem Innendurchmesser des oberen Rands der Gefäßwand entspricht. Damit ermöglicht der Axialvorsprung, der in der Schließposition des Deckels dann mit dem Bogen nicht innen an der Gefäßwand anliegt, ein Verschieben des Deckels, weil zumindest in einer Richtung (in der Richtung nach hinten) in der Schließposition des Deckels ein Abstand zwischen dem Axialvorsprung und der Gefäßwand vorhanden ist. In der Abgießposition hingegen liegt der Bogen mit seinem Außenumfang vollflächig am inneren Umfang der Gefäßwand an und verhindert ebenfalls den Austritt von Dampf, selbst wenn der Deckel etwas mit seinem flächigen Deckelrand von der Gefäßwand abgehoben ist.

Um ein Verschieben des Deckels aus der Schließposition nach hinten in die Abgießposition nicht zu behindern, weist der verbleibende Abschnitt des Axialvorsprungs gemäß einer vorteilhaften Ausgestaltung der Erfindung, die bei beiden hier dargestellten Alternativen angewendet werden kann, in weniger als einer Hälfte der Öffnung, nämlich der vorderen auf der Ausgießseite gelegenen Hälfte, zumindest teilweise oder insgesamt einen Außendurchmesser auf, der einem Innendurchmesser des gegenüberliegenden oberen Rands der Gefäßwand entspricht, und in der anderen Hälfte der Öffnung, das heißt der hinteren Hälfte mit dem Bogen des Axialvorsprungs, weist der verbleibende Abschnitt des Axialvorsprungs einen vergleichsweise kleineren Außendurchmesser auf oder erstreckt sich bogenförmig radial nach innen. Insbesondere kann ein fließender Übergang verschiedener Radien vorgesehen sein. Alternativ erstreckt sich der verbleibende Abschnitt des Axialvorsprungs ausschließlich in der genannten ersten Hälfte der Öffnung und nicht in der anderen Hälfte der Öffnung, wobei ein Abstand zur anderen Hälfte der Öffnung verbleibt.

Besonders günstig ist, wenn der verbleibende Abschnitt des Axialvorsprungs in einem Umfangsbereich, welcher dem Bogen des Axialvorsprungs diametral gegenüberliegt, eine Ausgießunterbrechung oder eine geringere Höhe als sich beidseitig anschließende Bereiche aufweist. Damit wird das Ausgießen durch den Axialvorsprung entweder nicht behindert oder, wenn der Axialvorsprung hier eine gewisse Höhe aufweist, hält der Ausgießvorsprung Speisen im Topf zurück und verhindert, dass diese ungewollt mit ausgegossen werden.

Um das Abgießen weiter zu erleichtern und einen definierten Abgießquerschnitt zu erreichen, kann der Deckelrand in einem Umfangsbereich, welcher dem Bogen des Axialvorsprungs diametral gegenüberliegt, eine zum oberen Rand der Gefäßwand gerichtete konkave Wölbung oder Aussparung aufweisen. Der Deckelrand liegt demnach in diesem Bereich der Wölbung oder Aussparung nicht auf dem oberen Rand der Gefäßwand auf, zumindest in der Abgießposition des Deckels. Die Wölbung kann aber derart peripher angeordnet sein, dass sie in der Schließposition des Deckels vollständig radial außerhalb der Gefäßwand positioniert ist, sodass eine Abdichtung auf der Gefäßwand erfolgt.

Bevorzugt kann jedoch eine entsprechende konkave Wölbung oder Aussparung im Deckelrand dazu vorgesehen sein, dass in der Schließposition Dampf aus dem Kochgefäß beziehungsweise dem Innenraum des Kochgefäßes entweichen kann. Dementsprechend ist dann in der Schließposition eine dampfleitende Verbindung zwischen der Wölbung beziehungsweise der Aussparung und dem Innenraum des Kochgefäßes vorgesehen, beispielsweise dadurch, dass der Axialvorsprung zumindest im Bereich der Wölbung oder der Aussparung in der Schließposition des Deckels einen Abstand zur inneren Oberfläche der Gefäßwand aufweist. Beispielsweise erstreckt sich der verbleibende Abschnitt des Axialvorsprungs im Bereich der Wölbung oder der Aussparung mit Abstand zur inneren Oberfläche der Gefäßwand und in seinem weiteren Verlauf nach hinten in Richtung des Bogens des Axialvorsprungs abdichtend in der Schließposition entlang der inneren Oberfläche der Gefäßwand, zumindest in einem vorderen Bereich beziehungsweise in einer vorderen Hälfte der Öffnung.

Besonders bevorzugt umfasst der Deckelrand einen Kunststoff, insbesondere Silikon. Gemäß einer besonders vorteilhaften Ausführungsform ist der Deckelrand vollständig aus Silikon gebildet. Ferner kann ein Deckelzentrum vorgesehen sein, das vom Deckelrand umschlossen wird, wobei das Deckelzentrum zum Beispiel aus Metall oder aus Glas gebildet ist.

Der Deckel kann zwei diametral zueinander angeordnete äußere Radialvorsprünge aufweisen und an der Gefäßwand kann wenigstens ein Griff im Bereich des oberen Rands vorgesehen sein, wobei der Griff einen Schlitz aufweist, in welchen jeweils einer der Radialvorsprünge einsteckbar ist, sodass der Deckel insbesondere zumindest im Wesentlichen vertikal ausgerichtet vom Griff gehalten wird. Bevorzugt sind entsprechend zwei Griffe mit einem solchen Schlitz im Bereich des oberen Rands der Gefäßwand vorgesehen, bevorzugt diametral zueinander angeordnet.

Gemäß einer anderen Ausführungsform kann auch nur ein einziger Radialvorsprung am Deckel vorgesehen sein oder mehr als zwei Radialvorsprünge.

Der oder die Radialvorsprünge sind bevorzugt aus demselben Material hergestellt wie der Deckelrand und insbesondere integral mit dem Deckelrand verbunden. Beispielsweise sind der Deckelrand und der oder die Radialvorsprünge aus einem einzigen Silikonteil hergestellt.

Der Deckelrand kann eine oder mehrere über dem Umfang geschlossene Ausgießöffnungen aufweisen, die besonders dann verwendet werden können, wenn vergleichsweise kleines Kochgut im Gefäßkörper zurückgehalten werden soll. Solche Ausgießöffnungen können beispielsweise im Bereich der Wölbung vorgesehen sein oder auch auf einem anderen Umfangsabschnitt des Deckelrands. Gemäß einer anderen Ausführungsform ist der Deckelrand frei von solchen Ausgießöffnungen.

Zum Beispiel ist eine Markierung am Deckelrand vorgesehen, welche einen bevorzugten Ausgießabschnitt kennzeichnet. Wenn der Deckel beispielsweise die dargestellte Wölbung aufweist, so kann insbesondere auf der oberen Oberfläche des Deckels im Bereich der Wölbung eine entsprechende Markierung, beispielsweise eine Darstellung von Tropfen, vorgesehen sein.

Wenn Radialvorsprünge außen am Deckel vorgesehen sind, die auch zum Greifen des Deckels dienen können, so sind radial innerhalb der Radialvorsprünge bevorzugt Hitzeabschirmungen vorgesehen, um die Finger eines Nutzers zu schützen. Solche Hitzeabschirmungen können beispielsweise als radial nach innen gerichtete Vorsprünge des Deckelrands, insbesondere aus Kunststoff oder Silikon, ausgeführt sein, die in das oder über das Deckelzentrum reichen.

Der Deckel kann einen zentralen Griff, beispielsweise aus Metall oder Kunststoff, insbesondere Hartkunststoff, umfassen. Der Griff kann zum Beispiel knopfförmig oder bügelförmig sein.

Die Erfindung soll nachfolgend anhand von Ausführungsbeispielen und den Figuren exemplarisch beschrieben erläutert werden.

Es zeigen:
- Figur 1: eine perspektivische Ansicht eines erfindungsgemäß ausgeführten Kochgefäßes;
- Figur 2: den Deckel des Kochgefäßes aus der Figur 1;
- Figur 3: den Deckel aus der Figur 2 positioniert in einer Schließposition am oberen Rand der Gefäßwand;
- Figur 4: den Deckel aus der Figur 2 positioniert in einer Abgießposition am oberen Rand der Gefäßwand;
- Figur 5: eine schematische Darstellung einer ersten Ausführungsform eines Deckels in der Schließposition;
- Figur 6: die Abgießposition des Deckels aus der Figur 5;
- Figur 7: eine schematische Darstellung einer zweiten Ausführungsform eines Deckels in der Schließposition;
- Figur 8: die Abgießposition des Deckels aus der Figur 7;
- Figur 9: den Deckel aus der Figur 1 eingesteckt in einen Griff;
- Figur 10: eine Seitenansicht des in den Griff eingesteckten Deckels aus der Figur 9.

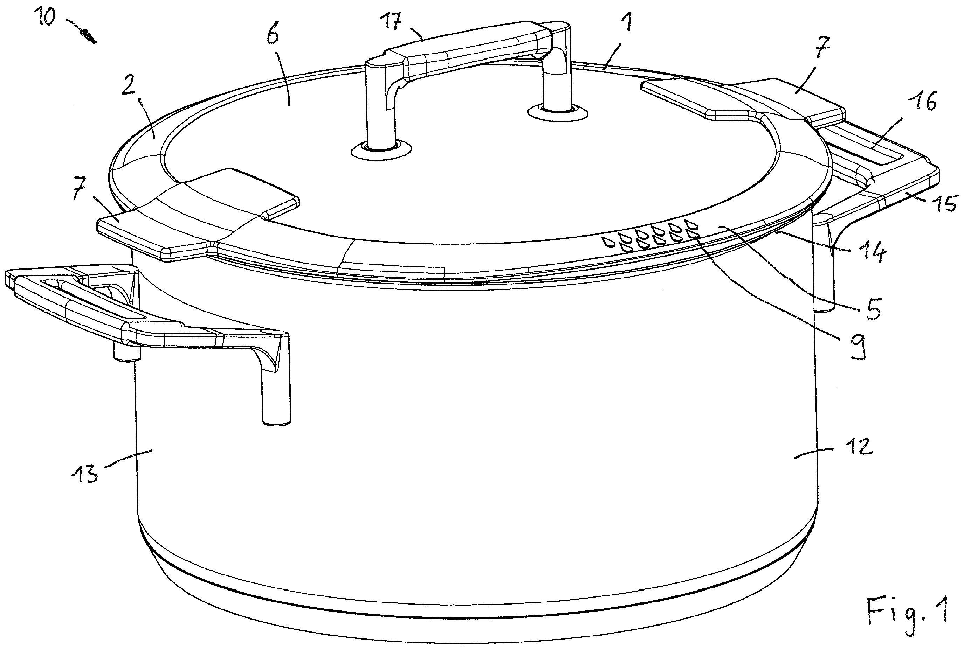

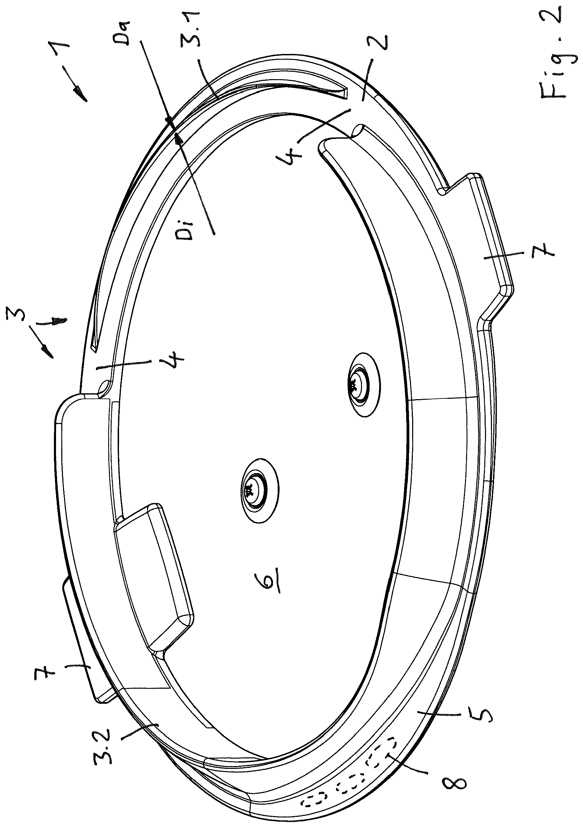

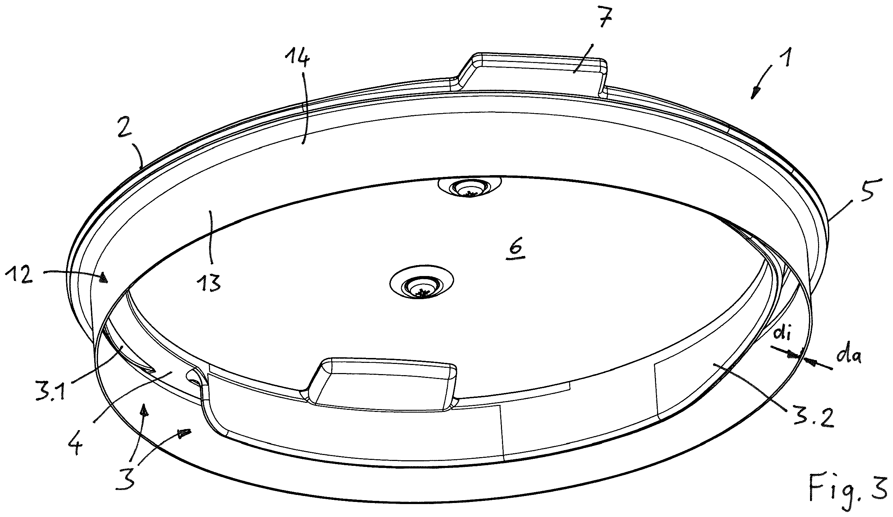

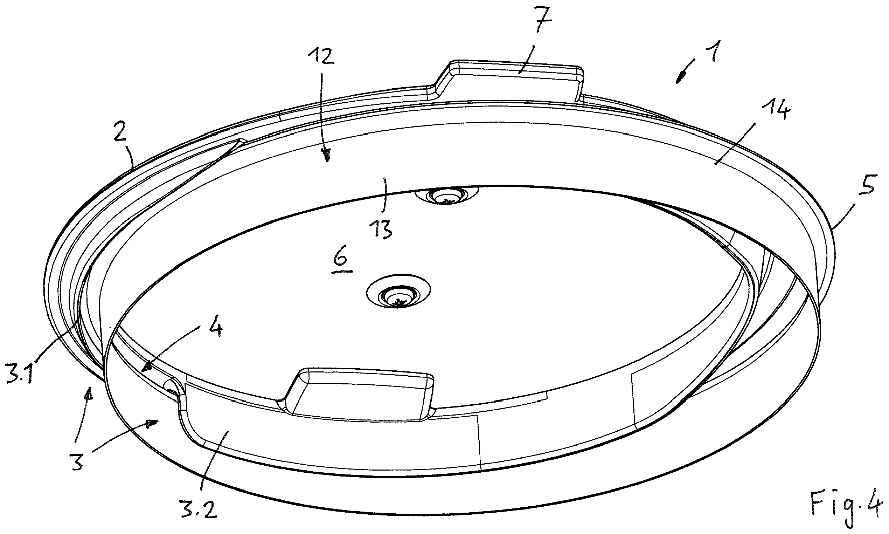

In den Figuren 1 bis 4 ist ein Ausführungsbeispiel eines erfindungsgemäßen Kochgefäßes 10 beziehungsweise dessen Deckels 1 gezeigt. Die Figur 1 zeigt das Kochgefäß 10 mit dem Gefäßkörper 12 und dem Deckel 1, die Figur 2 zeigt nur den Deckel 1 und die Figuren 3 und 4 zeigen den Bereich des oberen Rands 14 der die Öffnung 11 umschließenden Gefäßwand 13 des Gefäßkörpers 12.

In den Figuren 1 und 3 ist der Deckel 1 jeweils in seiner Schließposition mittig aufgelegt auf dem oberen Rand 14 der Gefäßwand 13 gezeigt. In der Figur 4 ist der Deckel 1 in seiner Abgießposition außermittig zum oberen Rand 14 der Gefäßwand 13 gezeigt.

Der Deckel 1 weist einen Deckelrand 2 auf, der zum Beispiel aus Silikon hergestellt ist und der ein Deckelzentrum 6, das zum Beispiel aus Glas hergestellt ist, vollumfänglich umschließt. Am Deckelzentrum 6 ist beispielsweise in der Mitte ein Deckelgriff 17 angeschlossen.

Zusätzlich weist der Deckelrand 2 zwei Radialvorsprünge 7 auf, die ebenfalls beispielsweise aus Silikon hergestellt sind und bevorzugt integral mit dem Deckelrand 2 ausgeführt sind. Auch an den Radialvorsprüngen 7 kann der Deckel 1 gegriffen und beispielsweise vom Gefäßkörper 12 abgehoben werden. Zum Schutz von Fingern, die an den Radialvorsprüngen 7 angreifen, sind radial nach innen gerichtete Wärmeabschirmungen im Bereich der Radialvorsprünge 7 am Deckelrand 2 angeschlossen, die ebenfalls aus Silikon hergestellt sein können und die sich im gezeigten Ausführungsbeispiel auf das Deckelzentrum 6 aus Glas erstrecken.

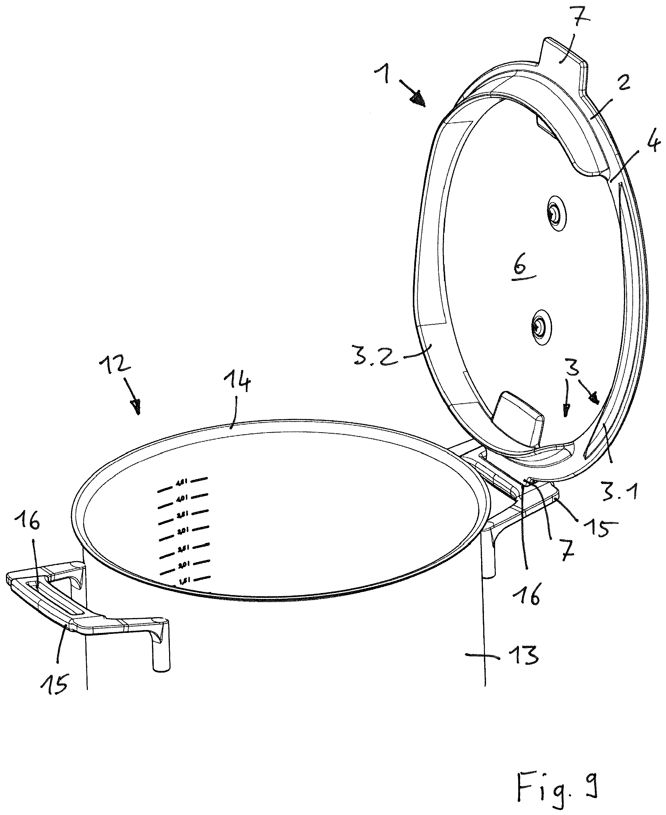

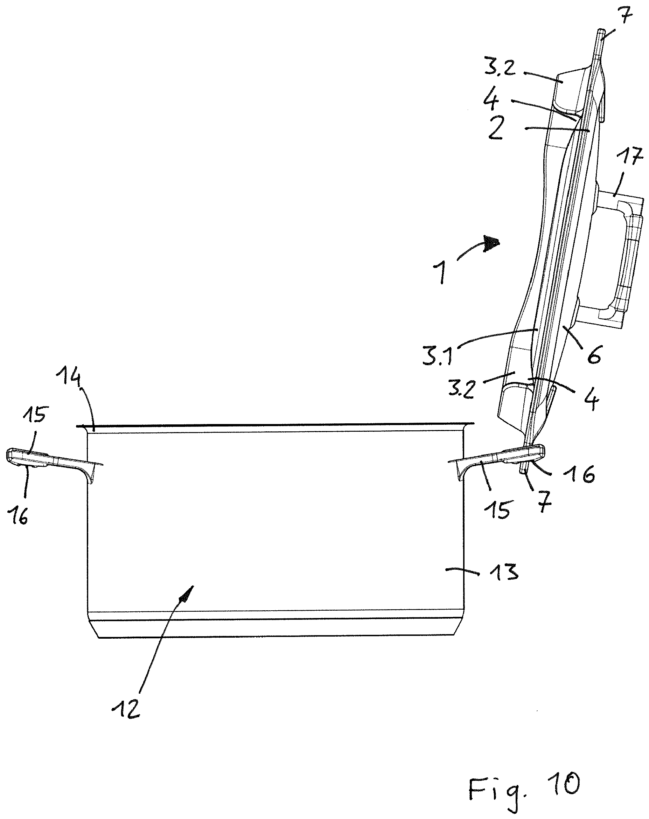

Die Radialvorsprünge 7 haben eine weitere Funktion, die sich aus den Figuren 9 und 10 ergibt. So können die Radialvorsprünge 7 in einen Schlitz 16 eines im Bereich des oberen Rands 14 der Gefäßwand 13 angeordneten Griffs 15 gesteckt werden, derart, dass der Deckel 1 weitgehend vertikal ausgerichtet ist.

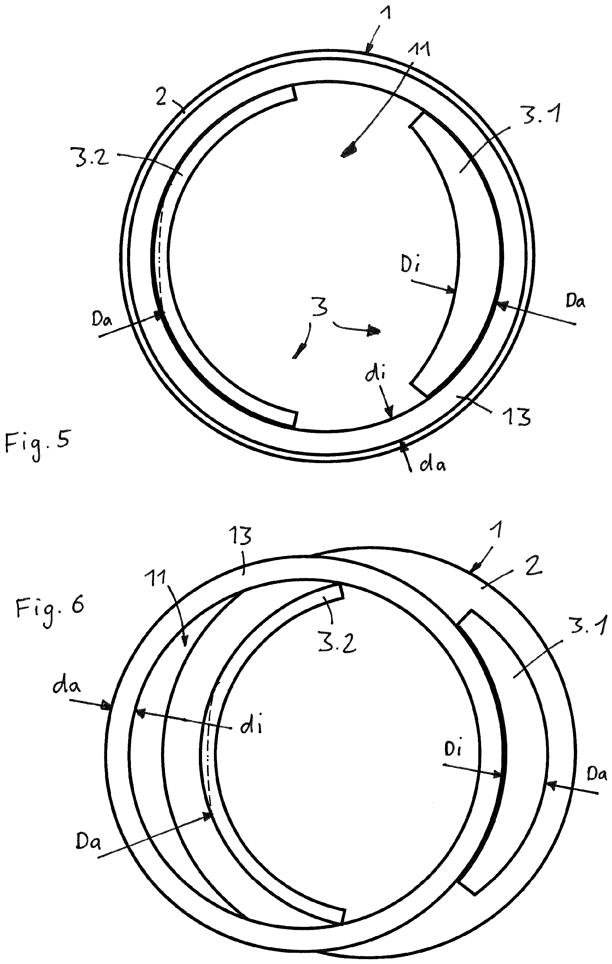

Ausgehend vom Deckelrand 2 erstreckt sich ein Axialvorsprung 3, der durch zwei Unterbrechungen 4 in einen Bogen 3.1 und einen verbleibenden Abschnitt 3.2 unterteilt wird. Dies ist besonders aus der Figur 2 ersichtlich. In der Schließposition des Deckels 1 liegen der Bogen 3.1 und der verbleibende Abschnitt 3.2 jeweils mit ihrem äußeren Umfang am Innenumfang der Gefäßwand 13 im Bereich des oberen Rands 14 an, siehe die Figur 3. In der Abgießposition des Deckels 1 ist hingegen der verbleibende Abschnitt 3.2 mit seinem äußeren Umfang mit Abstand zur Gefäßwand 13 angeordnet und der Bogen 3.1 liegt mit seinem inneren Umfang am äußeren Umfang der Gefäßwand 13 an, siehe die Figur 4. Bevorzugt ist der mittlere Bereich des verbleibenden Abschnitts 3.2, der diametral zum Bogen 3.1 angeordnet ist, jedoch auch in der Schließposition des Deckels 1 mit Abstand zum Innenumfang der Gefäßwand 13 angeordnet, um einen Dampfaustritt zu ermöglichen, siehe insbesondere die Figuren 2 und 3 sowie die gestrichelten Linien in den Figuren 5 bis 8.

Der Bogen 3.1 weist daher einen Innendurchmesser Di auf, der einem Außendurchmesser da des oberen Rands 14 der Gefäßwand 13 entspricht, vorzugsweise mit Ausnahme des mittleren Abschnitts des verbleibenden Abschnitts 3.2. Ferner weist der Bogen 3.1 einen Außendurchmesser Da auf, der einem Innendurchmesser di des oberen Rands 14 der Gefäßwand 13 entspricht. Der verbleibende Abschnitt 3.2 weist bevorzugt einen Außendurchmesser Da auf, der ebenfalls dem Innendurchmesser di des oberen Rands 14 der Gefäßwand 13 entspricht. Dadurch kann eine optimal auf den jeweiligen Zustand angepasste Abdichtung sowohl in der Schließposition des Deckels 1 als auch in der Abgießposition des Deckels 1 erreicht werden.

Dieses Dichtprinzip ist auch nochmals schematisch in den Figuren 5 und 6 gezeigt.

Der verbleibende Abschnitt 3.2 des Axialvorsprungs 3 weist bevorzugt diametral zum Bogen 3.1 eine Ausgießunterbrechung oder eine vergleichsweise reduzierte Höhe auf, wie sich besonders aus der Figur 2 ergibt. Hierdurch wird das Ausgießen von Flüssigkeit erleichtert, Speisen werden jedoch zurückgehalten. Ferner weist der Deckelrand 2 in diesem Bereich bevorzugt eine Wölbung 5 auf, die einen definierten vergleichsweise vergrößerten Ausgießquerschnitt zur Verfügung stellt. Besonders im Bereich der Wölbung 5 können, müssen aber nicht, Ausgießöffnungen 8 vorgesehen sein. Beispielsweise ist in der Figur 1 dargestellt, dass der Deckelrand 2 keine Ausgießöffnungen aufweist. Stattdessen ist der Bereich der Wölbung 5 auf der Oberseite des Deckelrands 2 mit einer Markierung 9 versehen, um die Ausgießstelle anzuzeigen. In der Figur 2 hingegen ist in gestrichelten Linien angedeutet, dass der Bereich der Wölbung 5 Ausgießöffnungen 8 aufweisen könnte.

Im Bereich der Radialvorsprünge 7 weist der verbleibende Abschnitt 3.2 eine vergleichsweise große Höhe auf, die vergleichsweise größer ist als die Höhe im übrigen Bereich des verbleibenden Abschnitts 3.2. Wie aus den Figuren 9 und 10 ersichtlich ist, dienen diese Bereiche mit vergleichsweise großer Höhe, die sich unmittelbar an die Unterbrechungen 4 anschließen, als Kondensatfang.

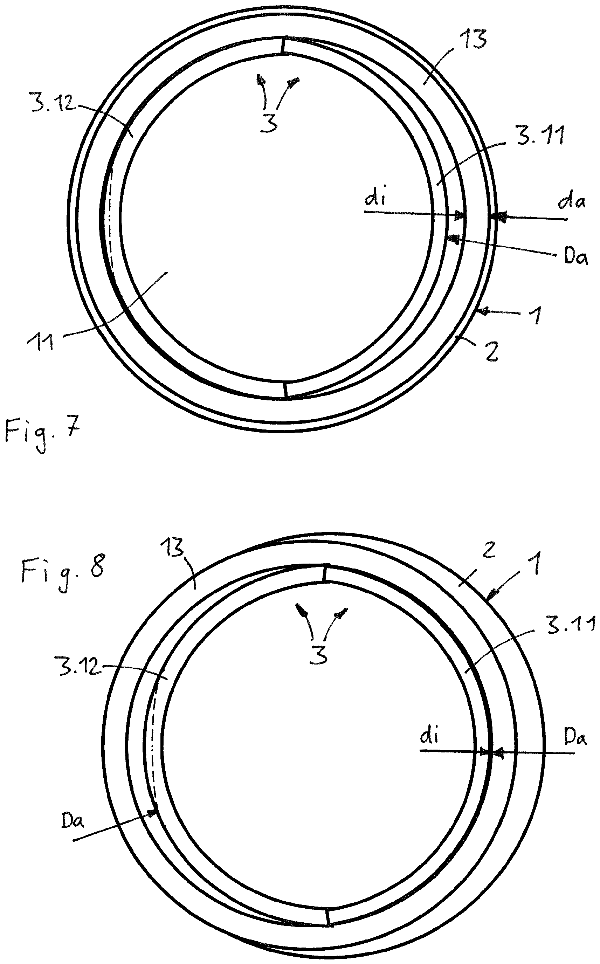

Die Ausgestaltung gemäß den Figuren 7 und 8 unterscheidet sich von der Ausgestaltung gemäß den übrigen Figuren durch die Gestaltung des Axialvorsprungs 3. So schließt sich der Bogen 3.11 unmittelbar an den verbleibenden Abschnitt 3.12 an, was jedoch ebenfalls nicht zwingend ist. Vielmehr könnte auch hier zwischen dem Bogen 3.11 und dem verbleibenden Abschnitt 3.12 wenigstens eine Unterbrechung vorgesehen sein. Jedoch ist die Abdichtfunktion des Bogens 3.11 anders als zuvor dargestellt. So weist der Bogen 3.11 zwar einen Außendurchmesser Da auf, der dem Innendurchmesser di der Gefäßwand 13 im Bereich des oberen Rands 14 entspricht, jedoch ist der Bogen 3.11 zumindest mit seinem äußeren Umfang gegenüber dem verbleibenden Abschnitt 3.12 beziehungsweise dessen äußeren Umfang radial nach innen versetzt. In der Abgießposition dichtet der Bogen 3.11 mit seinem äußeren Umfang gegen den inneren Umfang der Gefäßwand 13 ab, siehe die Figur 8. In der Schließposition des Deckels 1 hingegen ist ein Abstand zwischen dem inneren Umfang der Gefäßwand 13 und dem Bogen 3.11 vorgesehen, um die Verschiebung des Deckels 1 zu ermöglichen.

Der verbleibende Abschnitt 3.12 dichtet im Schließzustand des Deckels 1 mit seinem äußeren Umfang innen an der Gefäßwand 13 ab. Daher weist der verbleibende Abschnitt 3.12 einen Außendurchmesser Da auf, der dem Innendurchmesser di der Gefäßwand 13 im Bereich des oberen Rands 14 entspricht.

Bei der Ausgestaltung gemäß den Figuren 7 und 8 ist es nicht notwendig, dass der Axialvorsprung 3 über den oberen Rand 14 der Gefäßwand 13 hinweg verschoben wird, wenn der Deckel 1 aus seiner Schließposition in seine Abgießposition verbracht wird. Vielmehr verbleibt der Axialvorsprung 3 stets vollständig radial innerhalb der Gefäßwand 13, das heißt innerhalb der von der Gefäßwand 13 umschlossenen Öffnung 11.

Aus den Figuren 9 und 10 erkennt man ferner, dass der obere Rand 14 der Gefäßwand 13 eine Wölbung nach außen aufweisen kann. Die Konturen des Axialvorsprungs sowohl im Bereich des Bogens 3.1, 3.11 als auch im verbleibenden Abschnitt 3.2, 3.12 können der Wölbung und dem sich daran anschließenden Bereich der Gefäßwand 13 angepasst sein, wobei der sich hieran anschließende Bereich im gezeigten Ausführungsbeispiel zylindrisch ist. Besonders erkennt man diese Anpassung in der Figur 10 beim verbleibenden Abschnitt 3.2 und in der Figur 9 sowohl beim verbleibenden Abschnitt 3.2 als auch beim Bogen 3.1.

### Bezugszeichenliste

- 1: Deckel
- 2: Deckelrand
- 3: Axialvorsprung
- 3.1: Bogen
- 3.2: verbleibender Abschnitt
- 3.11: Bogen
- 3.12: verbleibender Abschnitt
- 4: Unterbrechung
- 5: Wölbung
- 6: Deckelzentrum
- 7: Radialvorsprung
- 8: Ausgießöffnung
- 9: Markierung
- 10: Kochgefäß
- 11: Öffnung
- 12: Gefäßkörper
- 13: Gefäßwand
- 14: oberer Rand
- 15: Griff
- 16: Schlitz
- 17: Deckelgriff
- Di: Innendurchmesser
- Da: Außendurchmesser
- di: Innendurchmesser
- da: Außendurchmesser

## Patentansprüche

1. Kochgefäß (10) mit einem mit einer oberen Öffnung (11) versehenen Gefäßkörper (12), der eine die Öffnung (11) umschließende Gefäßwand (13) mit einem oberen Rand (14) aufweist;
mit einem Deckel (1), der einen ringförmigen Deckelrand (2) zur Auflage auf den oberen Rand (14) der Gefäßwand (13) und einen vom ringförmigen Deckelrand (2) vorstehenden Axialvorsprung (3) aufweist, der mit einem Abstand zu einem äußeren Umfang des Deckelrands (2) angeordnet ist,
wobei
der Axialvorsprung (3) in einer auf die Gefäßwand (13) aufgelegten Schließposition des Deckels (1) in die Öffnung (11) eingreift; und
der Axialvorsprung (3) über seinem Umfang wenigstens zwei Unterbrechungen (4) aufweist, mit denen ein Bogen (3.1) des Axialvorsprungs (3) von einem ein- oder mehrteiligen verbleibenden Abschnitt (3.2) des Axialvorsprungs (3) abgetrennt wird;
**dadurch gekennzeichnet, dass**
der Bogen (3.1) einen Innendurchmesser (Di) aufweist, der einem Außendurchmesser (da) des oberen Rands (14) der Gefäßwand (13) entspricht.

2. Kochgefäß (10) gemäß Anspruch 1, **dadurch gekennzeichnet, dass** der Bogen (3.1) einen Außendurchmesser (Da) aufweist, der einem Innendurchmesser (di) des oberen Rands (14) der Gefäßwand (13) entspricht.

3. Kochgefäß (10) gemäß einem der Ansprüche 1 oder 2, **dadurch gekennzeichnet, dass** der Axialvorsprung (3) in der Schließposition des Deckels (1) mit einem äußeren Umfang des Bogens (3.1) und zumindest einem Abschnitt eines äußeren Umfangs des verbleibenden Abschnitts (3.2) abdichtend an einem inneren Umfang des oberen Rands (14) der Gefäßwand (13) anliegt.

4. Kochgefäß (10) gemäß Anspruch 3, **dadurch gekennzeichnet, dass** der Deckel (1) aus der Schließposition in eine Abgießposition verschiebbar ist, in welcher der Bogen (3.1) mit einem inneren Umfang abdichtend an einem äußeren Umfang des oberen Rands (14) der Gefäßwand (13) anliegt und der verbleibende Abschnitt (3.2) mit seinem diametral zum Bogen (3.1) angeordneten äußeren Umfang zum gegenüberstehenden inneren Umfang des oberen Rands (14) der Gefäßwand (13) mit Abstand positioniert ist.

5. Kochgefäß (10) gemäß einem der Ansprüche 1 bis 4, **dadurch gekennzeichnet, dass** der Bogen (3.1) in der Axialrichtung des Axialvorsprungs (3) eine geringere Höhe aufweist als benachbart hierzu angeordnete Bereiche des verbleibenden Abschnitts (3.2).

6. Kochgefäß (10) mit einem mit einer oberen Öffnung (11) versehenen Gefäßkörper (12), der eine die Öffnung (11) umschließende Gefäßwand (13) mit einem oberen Rand (14) aufweist;
mit einem Deckel (1), der einen ringförmigen Deckelrand (2) zur Auflage auf den oberen Rand (14) der Gefäßwand (13) und einen vom ringförmigen Deckelrand (2) vorstehenden Axialvorsprung (3) aufweist, der mit einem Abstand zu einem äußeren Umfang des Deckelrands (2) angeordnet ist, wobei
der Axialvorsprung (3) in einer auf die Gefäßwand (13) aufgelegten Schließposition des Deckels (1) in die Öffnung (11) eingreift; und
der Axialvorsprung (3) über seinem Umfang wenigstens zwei Abschnitte aufweist, nämlich einen Bogen (3.11) und einen sich in Umfangsrichtung daran anschließenden oder mit Abstand hierzu angeordneten ein- oder mehrteiligen verbleibenden Abschnitt (3.12);
**dadurch gekennzeichnet, dass**
der Bogen (3.11) gegenüber dem verbleibenden Abschnitt (3.12) am Deckelrand (2) radial nach innen versetzt ist und einen Außendurchmesser (Da) aufweist, der einem Innendurchmesser (di) des oberen Rands (14) der Gefäßwand (13) entspricht.

7. Kochgefäß (10) gemäß einem der Ansprüche 1 bis 6, **dadurch gekennzeichnet, dass** die Öffnung (11) kreisrund ist.

8. Kochgefäß (10) gemäß Anspruch 7, **dadurch gekennzeichnet, dass** der verbleibende Abschnitt (3.2, 3.12) des Axialvorsprungs (3) in weniger als einer Hälfte der Öffnung (11) zumindest teilweise oder insgesamt einen Außendurchmesser (Da) aufweist, der einem Innendurchmesser (di) des gegenüberliegenden oberen Rands (14) der Gefäßwand (13) entspricht, und in der anderen Hälfte der Öffnung (11) in der Schließposition des Deckels (1) einen kleineren Außendurchmesser (Da) aufweist oder sich bogenförmig radial nach innen erstreckt oder in Umfangsrichtung mit Abstand vor der anderen Hälfte der Öffnung (11) endet.

9. Kochgefäß (10) gemäß einem der Ansprüche 1 bis 8, **dadurch gekennzeichnet, dass** der verbleibende Abschnitt (3.2, 3.12) in einem Umfangsbereich, welcher dem Bogen (3.1, 3.11) diametral gegenüberliegt, eine Ausgießunterbrechung oder eine geringere Höhe als sich beidseitig anschließende Bereiche aufweist.

10. Kochgefäß (10) gemäß einem der Ansprüche 1 bis 9, **dadurch gekennzeichnet, dass** der Deckelrand (2) in einem Umfangsbereich, welcher dem Bogen (3.1, 3.11) diametral gegenüberliegt, eine zum oberen Rand (14) der Gefäßwand (13) gerichtete konkave Wölbung (5) oder Aussparung aufweist.

11. Kochgefäß (10) gemäß einem der Ansprüche 1 bis 10, **dadurch gekennzeichnet, dass** der Deckelrand (2) einen Kunststoff, insbesondere Silikon, umfasst oder hieraus gebildet ist und ein Deckelzentrum (6) umschließt, das aus Metall oder Glas gebildet ist.

12. Kochgefäß (10) gemäß einem der Ansprüche 1 bis 11, **dadurch gekennzeichnet, dass** der Deckel (1) einen Radialvorsprung (7) oder zwei diametral zueinander angeordnete äußere Radialvorsprünge (7) aufweist und an der Gefäßwand (13) wenigstens ein Griff (15) im Bereich des oberen Rands (14) vorgesehen ist, wobei der Griff (15) einen Schlitz (16) aufweist, in welchen einer der Radialvorsprünge (7) insbesondere zur im Wesentlichen senkrechten Anordnung des Deckels (1) einsteckbar ist.

13. Kochgefäß (10) gemäß Anspruch 12, **dadurch gekennzeichnet, dass** der oder die Radialvorsprünge (7) aus demselben Material hergestellt ist/sind wie der Deckelrand (2) und insbesondere integral mit dem Deckelrand (2) verbunden ist/sind.
